**Europäisches Patentamt**

**European Patent Office**

**Office européen des brevets**

(19)

(11) Veröffentlichungsnummer: **0 075 713**

**A2**

(12) # EUROPÄISCHE PATENTANMELDUNG

(21) Anmeldenummer: **82107494.5**

(22) Anmeldetag: **17.08.82**

(51) Int. Cl.³: **G 06 F 11/26**

(30) Priorität: **30.09.81 DE 3138989**

(43) Veröffentlichungstag der Anmeldung:
**06.04.83 Patentblatt 83/14**

(84) Benannte Vertragsstaaten:
**DE FR GB**

(71) Anmelder: **SIEMENS AKTIENGESELLSCHAFT**
**Berlin und München Wittelsbacherplatz 2**
**D-8000 München 2(DE)**

(72) Erfinder: **Hoffmann, Werner, Dr.-Ing.**
**Sachsenstrasse 15B**
**D-8522 Herzogenaurach(DE)**

(72) Erfinder: **Beifuss, Wolfgang**
**Breithornstrasse 2**
**D-8000 München 82(DE)**

(54) Zusätzliche Funktionseinheit in einem Mikroprozessor, Mikroprozessorsystem und Verfahren zu seinem Betrieb.

(57) Bei der vorliegenden Erfindung wird von einem Mikroprozessor ausgegangen, der für den Aufbau von Rechnern mit einem sehr breiten Leistungsspektrum geeignet ist. Entsprechend variabel muß das zugehörige Diagnose-System sein. In einer Minimalkonfiguration besteht ein solcher kompletter Rechner aus einem Mikroprozessor, einem Speicher, einem Zeitgeber und einer Stromversorgung. Die Erfindung ermöglicht auch in einem solchen Fall ein leistungsfähiges und zuverlässiges Test- und Diagnosesystem. Ein erfindungsgemäßer Mikroprozessorchip (5) weist eine zusätzliche Funktionseinheit (6) auf, welche durch Steuermittel gekennzeichnet ist, mit denen eine selbständige Steuerung von Testabläufen auf dem Mikroprozessorchip (5) durchführbar ist. Der Übergang in einen Test-Modus des Mikroprozessors kann intern und extern ausgelöst werden. Die Erfindung ermöglicht einen zuverlässigen Selbsttest eines Mikroprozessors ohne weitere Hilfsmittel. Die Erfindung verbessert Steuerbarkeit und Beobachtbarkeit einer hochintegrierten Mikroprozessors. Mit erfindungsgemäßen Mikroprozessorchips (5) kann ein Mikroprozessorsystem aufgebaut werden, wobei ein Mikroprozessorchip als Service-Prozessor (21) ausgelegt ist. Der Service-Prozessor (21) ist mit den zusätzlichen Funktionseinheiten (6) auf den einzelnen Mikroprozessorchips (5) über ein spezielles Kommunikationsnetz verbunden.

FIG 1

EP 0 075 713 A2

Croydon Printing Company Ltd.

SIEMENS AKTIENGESELLSCHAFT     Unser Zeichen
Berlin und München             VPA  81 P 7 1 4 9 E


Zusätzliche Funktionseinheit in einem Mikroprozessor,
Mikroprozessorsystem und Verfahren zu ihrem Betrieb.


Die Erfindung bezieht sich auf eine zusätzliche Funktionseinheit in einem Mikroprozessor, wie sie im Oberbegriff des Anspruchs 1 angegeben ist.

Das Testen eines hochintegrierten Bausteines, wie z.B. eines integrierten 32-Bit-Mikroprozessors, weist erhebliche Probleme auf. Die volle Funktionsfähigkeit solch eines integrierten Bausteines ist mit üblichen Test- und Prüfmethoden (Testautomat) in einer vernünftig kurzen Testzeit mit einer hohen Fehlerabdeckung nicht möglich.

Bisher wurden solche hochintegrierte Bausteine zumeist extern getestet. Dies geschah durch Testautomaten, Testmustergenerierungs-Geräte oder Vergleichsschaltungen mit einem bekannten guten Bauteil. Viele integrierte Prozessor-Bausteine (z.B. Mikroprozessor 8080) werden mit solchen Verfahren nicht im gesamten Funktionsumfang ausgetestet.

Immer mehr Mikroprozessoren, besonders die der neuen Generation mit einer Wortlänge von 16-Bit oder mehr, werden als Prozessoren in mittleren oder großen Rechensystemen eingesetzt. Es entstehen Ein- und Mehr-Prozessorsysteme unterschiedlicher Größe und für verschiedene Anwendungsgebiete. Dabei wird es für den Benutzer immer wichtiger, fast zu jedem Zeitpunkt zu wissen, ob das System noch korrekt arbeitet oder nicht.

My 1 Bla / 8.9.1981

Da eine on-line-Fehlererkennung im laufenden Betrieb sehr aufwendig ist, begnügt man sich in Anwendungen, die nicht ganz so kritisch sind, damit, den Rechner nach dem Systemstart in festen Zeitintervallen oder in Leerzeiten funktionell zu testen. Nur die Datenwege und der Speicher werden on-line durch fehlererkennende oder fehlerkorrigierende Codes (wie z.B. Parity, Hamming Codes und so weiter) überprüft. Solche bekannte Funktionstests werden mit Hilfe von Prüfmikroprogrammen in Form eines Selbsttests nach dem Bootstrapping-Verfahren (VDI-Berichte Nr.328 (1978), 77-85)) durchgeführt. Ausgehend von einem funktionstüchtigen Testkern werden bei dieser bekannten Anordnung sukzessive alle Komponenten des Systems getestet, wobei zum Testen einer jeweils weiteren Komponente nur solche Komponenten verwendet werden, die bereits getestet sind. Probleme ergeben sich bei dieser bekannten Anordnung in der Überprüfung des Testkerns, im korrekten Ablauf der Testfolge und in der Fehleranzeige. Ein ähnliches Selbsttest-Verfahren ist aus der europäischen Patentanmeldung EP 0 018 736 A 1 bekannt, in der im wesentlichen ein Selbsttest-Programm und seine Anwendung für einen bereits bekannten Mikrocomputer gelehrt werden.

Aus der europäischen Patentanmeldung EP 0 010 194 A 1 ist eine Wartungsschnittstellen-Einrichtung für eine datenverarbeitende Anlage mit einer zentralen Verarbeitungseinheit und einem Dienstprozessor bekannt. Die Wartungsschnittstellen-Einrichtung soll dabei die Operation des Dienstprozessors mit den Operationen der Zentraleinheit synchronisieren. Die Wartungsschnittstellen-Einrichtung enthält Schaltkreise zum Interpretieren von Befehlen sowohl des Dienstprozessors als auch der Zentraleinheit und ermöglicht den unbehinderten Datenverkehr zwischen beiden. Die Zentraleinheit enthält einen Mikroprozessor. Die Wartungsschnittstellen-Einrichtung
ist nach einem Prinzip aufgebaut, das Wartungsarbeiten
durch die Ermöglichung von Diagnose- und Testverfahren
erleichtert. Weil der Dienstprozessor gewöhnlich asynchron und wesentlich langsamer als die Zentraleinheit
arbeitet, ist ein Test- und Wartungsbetrieb nach dieser
Anmeldung relativ zeitaufwendig. Die volle Funktionsfähigkeit eines hochintegrierten Bausteines kann mit
einem üblichen Dienstprozessor in einer vernünftig kurzen Testzeit nicht mit einer hohen Fehlerabdeckung geprüft werden. Bei einem Mehr-Prozessorsystem wird nach
dieser Anmeldung entweder für jeden Prozessor ein eigener Dienstprozessor benötigt oder, wenn nur ein einziger
Dienstprozessor für ein Mehr-Prozessorsystem vorhanden
ist, ist der Betrieb eines solchen Mehr-Prozessorsystems
nach der genannten Anmeldung sehr zeitaufwendig.

Bei der vorliegenden Erfindung wird von einem Mikroprozessor ausgegangen, der für den Aufbau von Rechnern mit
einem sehr breiten Leistungsspektrum geeignet ist. Entsprechend variabel muß das zugehörige Diagnose-System
sein. In einer Minimalkonfiguration besteht ein solcher
kompletter Rechner aus einem Mikroprozessor, einem Speicher, einem Zeitgeber und einer Stromversorgung. Dazu
kommt eventuell notwendige Peripherie. Der Erfindung
liegt die Aufgabe zugrunde, auch in einem solchen Fall
ein leistungsfähiges und zuverlässiges Test- und Diagnose-
System zu ermöglichen.

Erfindungsgemäß wird diese Aufgabe durch eine zusätzliche
Funktionseinheit der eingangs genannten Art gelöst, welche die kennzeichnenden Merkmale des Anspruchs 1 aufweist.

Ausgestaltungen und Weiterbildungen der Erfindung sind den Unteransprüchen, der Beschreibung und der Zeichnung zu entnehmen.

Beim Testen und für eine Diagnose bei einem Mikroprozessor wird bei einem erfindungsgemäß ausgestalteten Mikroprozessor ein Dienstprozessor nicht unbedingt benötigt. Ein Test- und Wartungsbetrieb gemäß dieser Erfindung benötigt weniger Zeit als bekannte Verfahren. Die Steuerung des Selbsttests und die Ergebnisauswertung müssen nicht von einem Benutzer durchgeführt werden. Das Test- und Wartungs-Leistungsspektrum, welches durch die vorliegende Erfindung ermöglicht wird, ist weit umfangsreicher, als nach dem Stand der Technik möglich.

Durch die Erfindung werden Steuerbarkeit und Beobachtbarkeit eines hochintegrierten Mikroprozessors wesentlich verbessert. Dadurch werden schon bei der Entwicklung eines hochintegrierten Mikroprozessors sowohl der eigentliche Test als auch die Prüfvorbereitung wesentlich vereinfacht. Beim Fertigungstest werden durch die Erfindung die Testkosten möglichst niedrig gehalten. Die Erfindung ermöglicht mit relativ einfachen Mitteln zusätzliche Informationen über Fehlerorte in hochintegrierten Mikroprozessoren, welche bei statistischer Auswertung wertvolle Hinweise auf Schwachstellen im Design liefern.

In leistungsfähigeren Rechnern existieren mehrere Prozessoren mit (teilweise) unterschiedlichen Funktionen, die über einen gemeinsamen Systembus verbunden sind. In diesen Fällen wird ein erfindungsgemäßer Mikroprozessor als Service-Prozessor ausgelegt. Er ist mit den zusätzlichen Funktionseinheiten auf den einzelnen Mikroprozessorchips über ein spezielles Kommunikationsnetz verbunden.

Die Erfindung ermöglicht neue Testmethoden für den Fertigungstest. Eine erfindungsgemäße zusätzliche Funktionseinheit übt sowohl reine Schaltfunktionen als auch Steuerungsaufgaben aus. Sie hat eine geringe Komplexität gegenüber dem Mikroporzessor selbst. Beim Einsatz in der Fertigung übernimmt eine erfindungsgemäße zusätzliche Funktionseinheit Aufgaben, die heute von Testautomaten durchgeführt werden. Sie steuert einen Selbsttest auf dem Mikroprozessorchip. Dadurch wird ein paralleles Testen verschiedener Mikroprozessorchips möglich. Eine erfindungsgemäße zusätzliche Funktionseinheit selbst wird als harter Kern von außen durch einen relativ einfachen Prüfautomaten getestet. Bei einem Mehr-Prozessorsystem kann ein Mikroprozessor als Service-Prozessor ausgelegt werden. Der Service-Prozessor übt Funktionen aus, wie sie heute bei entsprechenden Prozessoren in Großrechnern üblich sind. Der Service-Prozessor hat Zugriff zu allen Systemkomponenten (Mikroprozessoren, Hauptspeicher, zentrale Stromversorgung und so weiter). Zum Betriebssystem besitzt der Service-Prozessor eine funktionelle Schnittstelle.

Beim Fertigungstest ermöglicht es die Erfindung, daß mit relativ einfachen Testgeräten relativ schnell festgestellt werden kann, ob ein Mikroprozessorchip fehlerfrei ist oder nicht (go/no-go-Test).

Mit Hilfe der Erfindung läßt sich ein dreistufiges leistungsfähiges und zuverlässiges Diagnose-System aufbauen:

1. Auf der untersten Ebene testet sich jeder Mikroprozessor selbst. Bei diesem Selbsttest mit Hilfe von Mikrodiagnoseprogrammen wird ein Testkern als fehlerfrei vorausgesetzt. Einzelne Komponenten des Mikroprozessors können dabei auch durch spezielle Prüflogiken hardware-mäßig überprüft werden. Auf dieser Ebene kann teilweise auch eine laufende on-line-Fehlererkennung durch Hardware-Redundanz angesiedelt werden.

2. Die Steuerung des Selbsttests und die Ergebnisauswertung werden auf der zweiten Ebene durch die jeweilige erfindungsgemäße zusätzliche Funktionseinheit durchgeführt. Die zusätzliche Funktionseinheit testet auch den Testkern, der für den Selbsttest eines Mikroprozessors notwendig ist, wertet die Anzeigen der Prüflogik aus und reagiert im Fehlerfalle entsprechend, z.B. mit einem Mikroprozessor-Stop.

3. Auf der dritten Ebene übernimmt bei Mehr-Prozessor-systemen der Service-Prozessor die Koordination für eine Gesamtdiagnose. Der Service-Prozessor testet die einzelnen zusätzlichen Funktionseinheiten und diejenigen Komponenten, welche sich nicht selbst testen können, z.B. Arbeitsspeicher und so weiter. Bei Störungen kann der Service-Prozessor, wenn entsprechende Redundanz vorhanden ist, eine Rekonfiguration durchführen.

Die Erfindung ist in der Zeichnung dargestellt und wird im folgenden näher beschrieben.

Fig.1 zeigt ein Blockschaltbild eines erfindungsgemäßen Mikroprozessorchips.

Fig.2 zeigt ein sternförmiges Kommunikationsnetz bei einem Mehr-Prozessorsystem.

Fig.3 zeigt die Struktur einer erfindungsgemäßen zusätzlichen Funktionseinheit.

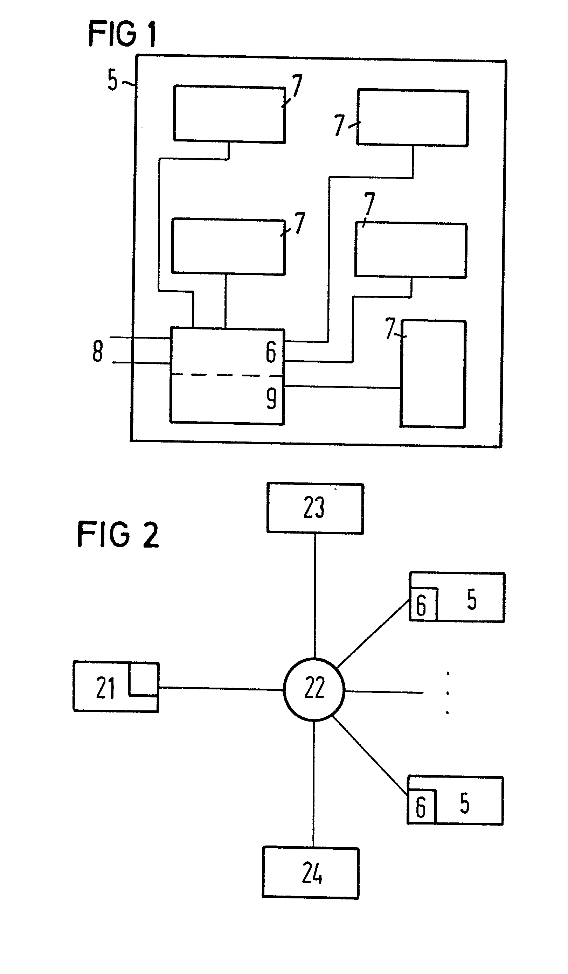

Fig.1 zeigt ein Blockschaltbild eines erfindungsgemäßen

Mikroprozessorchips 5. Eine erfindungsgemäße zusätzliche Funktionseinheit 6 ist zusätzlich zum normalen Funktionsumfang des hochintegrierten Mikroprozessorchips 5 mit aufgebaut. Die Komplexität dieser integrierten zusätzlichen Funktionseinheit 6 ist kleiner als die Komplexität des Testsystems. Die zusätzliche Funktionseinheit 6 kann mit herkömmlichen Testgeräten in relativ kurzer Zeit auf Funktionsfähigkeit hin überprüft werden. Danach übernimmt die zusätzliche Funktionseinheit 6 das Testen des integrierten Hauptsystems. Da dieses Testen auf dem Mikroprozessorchip 5 intern erfolgt, kann es auf vielen Mikroprozessorchips parallel ablaufen und belegt nicht einen Testautomaten. Die zusätzliche Funktionseinheit 6 kann einen Programmspeicher 9 aufweisen und ist mit sämtlichen Funktionseinheiten 7 des Mikroprozessors verbunden. Die zusätzliche Funktionseinheit 6 kann auch zu Funktionstests für Signatur-Register oder Scan-Path-Methoden eingesetzt werden. Die zusätzliche Funktionseinheit 6 ist ein eigenständiger Teil eines VLSI-Chips. Die zusätzliche Funktionseinheit 6 kann über die Schnittstelle 8 für den Mikroprozessorchip 5 die Verbindung nach außen übernehmen. Die zusätzliche Funktionseinheit 6 kann darüber hinaus bei mikroprogrammierten Prozessoren das Laden von Mikroprogrammen übernehmen, sie kann Hardware-Fehler im Mikroprozessorchip-System überwachen und sie kann Monitorfunktionen wie Wartungsfeld-Unterstützung eines mikroprogrammierten Rechners ausüben.

Die zusätzliche Funktionseinheit 6 auf dem Mikroprozessorchip 5 übt sowohl reine Schaltfunktionen als auch Steuerungsaufgaben aus. Sie übt z.B. Wartungs- und Initialisierungsfunktionen aus: Sie macht nichtzugängliche Teile des Mikroprozessors von außen zugänglich (sämtliche Register einschließlich Status-Register, Flags, Pipeline-Register, die Busse und so weiter). Sie erlaubt, einen definierten Anfangszustand im Mikroprozessor zu erzeugen (reset), den Mikroprozessor einschließlich des Mikroprogrammteiles in einen bestimmten Zustand zu bringen und einzelne Register und Flags zu setzen und zu lesen. Damit ist es auch möglich, dem Mikroprozessor einen Befehl von außen "aufzuzwingen". Mit Unterstützung der zusätzlichen Funktionseinheit 6 ist eine Einzelbefehlsausführung (single-step-mode) möglich.

Die zusätzliche Funktionseinheit 6 übt Überwachungsfunktionen aus: Für einen Selbsttest des Mikroprozessors besitzt die zusätzliche Funktionseinheit 6 die Fähigkeit, eine Zeitüberwachung und eventuell auch eine Adress-Überwachung durchzuführen, während auf dem Mikroprozessor Diagnose-Programme ablaufen. Die Auswertung der einzelnen Ergebnisse von den Prüflogiken übernehmen zum größten Teil die Prüflogiken selbst, und zwar hardwaremäßig. Die zusätzliche Funktionseinheit 6 reagiert auf ein bereitgestelltes Endergebnis, das eine bloße Fehler-Ja/Nein-Meldung ist, entsprechend. Es kann z.B. das Anstoßen einer Befehlswiederholung oder ein unbedingter Prozessor-Stop sein.

Die zusätzliche Funktionseinheit 6 übernimmt Ausführung und Steuerung von Prüfprogrammen: Die zusätzliche Funktionseinheit 6 testet sich selbst, soweit als möglich, und testet denjenigen Teil des harten Kerns des eigentlichen Mikroprozessors, der nicht durch spezielle Prüflogiken abgedeckt ist, mit Hilfe von Mikrodiagnose-Programmen. Die zusätzliche Funktionseinheit 6 übernimmt außerdem die Auswertung der Ergebnisse des Mikroprozessor-Selbsttests. Die zusätzliche Funktionseinheit 6 kann auch Betriebssystem-Funktionen übernehmen, wie das Führen von Befehlsstatistiken und die Überwachung von Auslastungen einzelner Komponenten, wie z.B. der zentralen Verarbeitungseinheit, der Busse, Kanäle und so
weiter. Die Übernahme dieser Funktionen ist dort sinnvoll, wo die zusätzliche Funktionseinheit 6 die Fähigkeit dazu bereits bedingt durch andere Anforderungen
besitzt und im laufenden Betrieb damit Leerzeiten ausgefüllt werden können.

Fig.2 zeigt ein sternförmiges Kommunikationsnetz bei
einem Mehr-Prozessorsystem. Bei Mehr-Prozessorsystemen
besteht die Hardware für das Diagnose-System aus einem
Service-Prozessor 21 und den zusätzlichen Funktionseinheiten 6 in den anderen Funktionsprozessoren 5. Für
den Austausch von Daten und Kommandos an die zusätzlichen Funktionseinheiten 6 muß zwischen dem Service-Prozessor 21 und den zusätzlichen Funktionseinheiten 6 ein
geeignetes Kommunikationssystem existieren. Dabei sind
zunächst zwei extreme Varianten möglich:

a) Es werden die vorhandenen Kommunikationswege, also
   der Systembus, mit verwendet.

b) Es existiert ein eigenes Kommunikationsnetz.

Wenn der Service-Prozessor 21 Funktionen ausübt, wie
sie heute von entsprechenden Prozessoren bei Großrechnern üblich sind, müssen Signale an einzelne Funktionsprozessoren 5 (wie z.B. das Reset-Signal) vom
Service-Prozessor 21 in Form eines Kommandos (Datenwort) nach außen gegeben werden. Eine geeignete, spezielle Logikeinheit (Koordinator 22) muß dann dieses
Kommando in ein Leitungssignal an ein ausgewähltes
Ziel umwandeln. Hängt der Koordinator 22 mit am Systembus, so wird seine Komplexität zu groß. In einer Ausgestaltung der Erfindung wird daher ein eigenes sternförmiges Kommunikationsnetz (mit Datenleitungen) mit dem Koordinator 52 im Zentrum geschaffen, wie es in
Fig.2 dargestellt ist.

Das in Fig.2 gezeigte Kommunikationsnetz wird im wesentlichen im Wartungs- und Fehlerfall und für die Initialisierung des Systems bzw. von einzelnen Systemkomponenten eingesetzt. Im Betriebsfall steht dem Service-
Prozessor 21 eine funktionelle Schnittstelle zum Betriebssystem zur Verfügung. Der hierbei notwendige
Datenaustausch wird über den Systembus und den Hauptspeicher durchgeführt.

Ein wesentlicher Vorteil eines zweiten Kommunikationssystems bei einem Mehr-Prozessorsystem liegt auch darin,
daß bei Ausfall des Systembusses noch eine funktionierende Verbindung zwischen den einzelnen Prozessoren zur
Verfügung steht.

Die Kommunikationsschnittstelle des in Fig.2 gezeigten
Kommunikationssystems muß einen maximalen Informationsfluß von 10 KBit/sec bewältigen und sie muß interruptfähig sein.

Im folgenden wird ein Kommunikationssystem zwischen
einem Service-Prozessor 21 (aktiver Partner) und den
zusätzlichen Funktionseinheiten 6 (passive Partner)
durch Beschreibung der Schnittstellen erläutert:

Schnittstelle-Koordinator 22 - zusätzliche Funktionseinheit 6 / Funktionsprozessor 5:

Der Zustand der Statussignale STATUS i (2-7 Leitungen) kann vom Service-Prozessor 21 gelesen werden, ohne daß dabei der Funktionsprozessor 5 angehalten wird.

Auf dem Datensignal DTOSP (data to service-processor) werden die Daten bitseriell bei einer Leseoperation abgerufen. Die Daten können parity-gesichert sein. Das Dauersignal SHIFT begleitet die ganze Leseoperation. Als Schrittakt dient der Strobe SSHIFT. Ein Impuls auf STRANS (strobe transfer) geht der Leseoperation voraus und kann von der zusätzlichen Funktionseinheit 6 als Strobe für die parallele Übernahme aus dem adressierten Quellregister in ein Schieberegister verwendet werden. Ein Impuls auf SDATA beendet die Leseoperation. Auf dem Datensignal DFRSP (data from service-processor) werden bitseriell die Daten an die zusätzliche Funktionseinheit

0075713

81 P 7149 E

6 übertragen. Derartige Daten können auch Befehle an die zusätzliche Funktionseinheit 6 sein. Dies wird durch das Signal CODA (command/data) angezeigt. Befehle können Steuerbefehle (ohne Datentransfer), Ladebefehle (mit Datentransfer vom Service-Prozessor 21 zur zusätzlichen Funktionseinheit 6) und Lesebefehle (mit Datentransfer von der zusätzlichen Funktionseinheit 6 zum Service-Prozessor 21) sein.

Bei der Ausführung von Service-Operationen, die das normale Timing nicht sicher einhalten können, setzt die zusätzliche Funktionseinheit 6 das Anzeigensignal WAIT so lange, wie die Operation noch nicht beendet ist.

Auf dem Signal STOPSTATE teilt eine zusätzliche Funktionseinheit 6 mit, daß ein Fehlerfall vorliegt und daß der Prozessor 5 in den Stop-Zustand übergegangen ist. Der Koordinator 22 kann daraus, ohne den zeitraubenden Umweg über den Service-Prozessor 21, das Signal STOP (unmittelbarer Stop) für alle Funktionsprozessoren 5 bilden, vorausgesetzt, diese Funktion ist eingeschaltet. Damit läßt sich eine Fehlerfortpflanzung verhindern, da das ganze System schnell eingefroren werden kann. Auf dem Signal RESET wird der Rücksetzbefehl für den gesamten Funktionsprozessor 5 übertragen. Es wird vom Koordinator 22 aufgrund eines Befehls des Service-Prozessors 21 erzeugt. Letzteres gilt auch für das Signal TMHALT (Testmodus/Halt). Es bewirkt einen Halt des Funktionsprozessors 5 und einen Übergang in den Test-Modus.

Schnittstelle Service-Prozessor 21 - Koordinator 22:

Für die beiden Datenleitungen DTOSP und DFRSP sowie die Steuerleitungen zur Datenübertragung gilt das gleiche wie bei der soeben beschriebenen Schnittstelle zu den zusätzlichen Funktionseinheiten 6. Ein Kommando auf diesem Abschnitt kann jedoch entweder ein Befehl an den Koordinator 22 (z.B. zur Erzeugung eines Steuersignals) oder ein Kommando an eine zusätzliche Funktionseinheit 6 sein. Das Signal SPRQ (service-processor request) wird vom Koordinator 22 im Falle einer Fehleranzeige einer zusätzlichen Funktionseinheit 6 erzeugt und bewirkt eine Unterbrechung im Service-Prozessor 21. Das WAIT-Signal, das von der zusätzlichen Funktionseinheit 6 zum Koordinator 22 existiert, wird auf der Datenleitung DTOSP zum Service-Prozessor 21 weitergeleitet.

Die Struktur der zusätzlichen Funktionseinheit 6 ist im wesentlichen davon abhängig, wieviele der weiter obengenannten Aufgaben in ihr implementiert werden sollen. Daraus lassen sich zwei Extrema ableiten:

1. Im einfachsten Fall liefert die zusätzliche Funk-

0075713

81 P 7149 E

tionseinheit 6 nur die Steuersignale für die Prüflogik auf dem Mikroprozessorchip 5, speichert Fehlermeldungen, z.B. von der Paritätsprüfung, generiert daraus ein Interrupt-Signal an den Service-Prozessor 21 und bringt den Prozessor 5 in einen definierten HALT-Zustand. Beim Selbsttest mit Testmustergenerator und Signatur-Analyse auf dem Mikroprozessorchip 5 führt die zusätzliche Funktionseinheit 6 die Steuerung durch.

Eine zusätzliche Funktionseinheit 6 hierfür besteht nur aus einer reinen Ablaufsteuerung ohne Rechen- und Leitwerk, und besteht z.B. aus einem Zähler mit nachgeschaltetem PLA(programmable logic array). Eingriffe in die Prozessorfunktion sind damit nur beschränkt möglich. Eine derart einfache zusätzliche Funktionseinheit kann jedoch leicht getestet werden, wenn die hohe sequentielle Tiefe durch entsprechende Maßnahmen aufgelöst wird.

2. Die hardwaremäßig aufwendigste und damit umfassendste Möglichkeit der Realisierung ist eine zusätzliche Funktionseinheit 6 mit allen Strukturelementen eines Prozessor, wie Leitwerk und Rechenwerk, sowie eigenem Mikroprogrammspeicher. Hierzu gibt es verschiedene Ausgestaltungen:

a) Die zusätzliche Funktionseinheit 6 ist mikroprogrammierbar. Die Mikroprogramme können von extern geladen und damit an die jeweilige Aufgabe optimal angepaßt werden. Der Mikroprogrammspeicher kann dabei relativ klein sein, da bei Bedarf weitere Programme nachgeladen werden können. Wenn ein eigenes Bus-System für die Kommunikation zwischen Service-Prozessor 21 und zusätzlicher Funktionseinheit 6 vorhanden ist, kann dies geschehen, ohne den Prozessorablauf zu behindern. Zusätzlich zum WCS(beschreibbaren Mikroprogrammspeicher) ist

für die zusätzliche Funktionseinheit 6 ein Festwertspeicher für ein Urlade-Programm notwendig, um die Mikroprogramme selbständig laden zu können.

b) Weniger aufwendig ist eine fest programmierte zusätzliche Funktionseinheit 6. Allerdings wird dann ein insgesamt größerer Festwertspeicher benötigt.

Gegenüber dem Prozessor selbst ist eine zusätzliche Funktionseinheit 6, welche als ein "echter" Prozessor ausgebildet ist, immer noch von geringerer Komplexität. Einige Funktionseinheiten können in der zusätzlichen Funktionseinheit 6 ganz entfallen, wie z.B. Pipeline-Register, Nanoprogrammspeicher und so weiter, andere Funktionseinheiten können in der zusätzlichen Funktionseinheit 6 einfacher ausgelegt werden, wie z.B. Befehlsdecodierung, ALU und so weiter. Auch der Befehlssatz ist sehr vereinfacht. Die Wortbreite kann bei der zusätzlichen Funktionseinheit 6 auf maximal 8 Bit beschränkt werden.

Die zusätzliche Funktionseinheit 6 soll die STATUS-Meldungen des Mikroprozessors überwachen, aufbereiten und gegebenenfalls auswerten, sowie den Testablauf steuern. Deshalb müssen die Prüflogiken auf dem Mikroprozessorchip 5, d.h. Multiplexer zur Verbindung von Registern mit den Datenbussen, Prüfbus, Initialisierungslogik und Schaltungen zur Fehlererkennung, wie z.B. Paritätsprüfung, über eigene Steuer- und Meldeleitungen mit der zusätzlichen Funktions-/einheit 6 verbunden sein. Eine umfangreiche Überwachung der Mikroprozessorfunktionen erfordert darüber hinaus die Weiterleitung wichtiger Mikroprozessor-Steuersignale, z.B. Lesesignale für den Mikro- und Nanoprogrammspeicher, an die zusätzliche Funktionseinheit 6. Die gleichen Leitungen können im Testfall dann auch zur Steuerung einzelner Mikroprozessorfunktionen verwendet werden.

Zur Übertragung von Daten zwischen dem Mikroprozessor und der zusätzlichen Funktionseinheit 6, also Prüfbitmuster, Testergebnisse oder Signatoren, soweit sie nicht unmittelbar am Signatur-Register ausgewertet werden, wird in einer Ausbildung der Erfindung der Prüfbus verwendet. Der Prüfbus erlaubt eine serielle Übertragung der Inhalte von Registern unterschiedlicher Wortlänge auf einem vom Datenbus getrennten Weg. Darüber hinaus kann der Prüfbus leicht selbst geprüft werden. Der zur Datenübertragung auf dem Prüfbus erforderliche Takt wird von der zusätzlichen Funktionseinheit 6 geliefert.

Ist auf dem Mikroprozessorchip 5 kein Prüfbus vorgesehen, so werden die Daten über die Prozessorbusse übertragen. Diese müssen jedoch auf ihre Funktionsfähigkeit von der zusätzlichen Funktionseinheit 6 geprüft werden, z.B. durch Einschreiben von Testmustern in ein Register und Zurücklesen.

Zur Sicherung der Information auf den Meldeleitungen wird in einer Ausbildung der Erfindung jeweils das inverse Signal zusätzlich übertragen. Einfache stuck-at-Fehler können damit erkannt werden.

Um das in der Fig.2 dargestellte Kommunikationssystem zwischen einem Service-Prozessor 21 und anderen Funktionsprozessoren 5 realisieren und den Selbsttest eines Mikroprozessors mit Hilfe von Mikrodiagnose-Programmen durchführen zu können, sind für das eigene Kommunikationssystem für Diagnose-Zwecke in Mehr-Prozessorsystemen zehn zusätzliche Anschlüsse (pins) am Mikroprozessorchip nötig. Dabei ist vorausgesetzt, daß die Status-Signale, das Reset-Signal und Stop-Signal sowie ein Interrupt-Eingang auf jeden Fall erforderlich sind. Der Service-Prozessor 21 benötigt keine Extraanschlüsse, die ein anderer Funktionsprozessor 5 nicht benötigt. Bei Verwendung eines solchen Mikroprozessorchips als Einzelprozessor können die zusätzlichen Anschlüsse als gewöhnliche serielle Ein-/Ausgabe-Schnittstelle verwendet werden. Nur das WAIT-Signal wird bei einer Einzelprozessor-Verwendung nicht benötigt. Beim Einsatz des Mikroprozessorchips als Service-Prozessor 21 beträgt der Speicherbedarf ca. 4-8 kbit ROM für den Lader des beschreibbaren Mikroprogrammspeichers (WCS) und für einige Diagnoseroutinen und mindestens 8 kbit WCS zum Nachladen von Diagnose-Programmen. Der gleiche Speicherbedarf ist etwa erforderlich für die Mikrodiagnose-Programme in anderen Funktionsprozessoren 5. Der Service-Prozessor 21 benötigt noch eigene E/A-Kanäle zum Anschluß eines peripheren Speichers und der Konsole.

Der Selbsttest eines Rechensystems wird im oben angeführten "Bootstrapping"-Verfahren durchgeführt. Ausgelöst wird der Selbsttest entweder von außen, z.B. durch einen Service-Prozessor oder über die Konsole, durch Ereignisse von innen, z.B. bei einem von zusätzlicher Prüflogik angezeigten Fehlerzustand oder durch das Betriebssystem. Neben der Steuerung des Selbsttests testet die zusätzliche Funktionseinheit 6 den Testkern des Mikroprozessors. Die zusätzliche Funktionseinheit 6 selbst wird als fehlerfrei bzw. als bereits von außen getestet vorausgesetzt. Unter dem Testkern sollen alle die Komponenten und Elemente eines Mikroprozessors verstanden werden, die zum Test des ersten Testobjekts notwendig sind. Der Testkern soll möglichst minimal sein, da seine Komponenten von "außen" getestet werden müssen. Bei einem Einzelprozessorsystem ist die zusätzliche Funktionseinheit 6 verantwortlich für den Gesamttest. Sie selbst wird dabei als fehlerfrei vorausgesetzt bzw. testet sich in einem Grundtest selbst. Anschließend an diesen Grundtest testet die zusätzliche Funktionseinheit 6 den harten Kern des Mikroprozessors, der für einen nachfolgenden Selbsttest des Gesamtrechners notwendig ist. Bei diesem Selbsttest übernimmt die zusätzliche Funktionseinheit 6 die Auswertung des Testergebnisses.

Bei einem Mehr-Prozessorsystem übernimmt der Service-Prozessor 21 die Verantwortung und die Überwachung der Gesamtdiagnose. Da auch der Service-Prozessor 21 eine eigene zusätzliche Funktionseinheit 6 hat, testet er sich selbst analog zum Test eines Einzelprozessorsystems 5. Anschließend testet der Service-Prozessor 21 der Reihe nach die einzelnen zusätzlichen Funktionseinheiten 6 in den anderen Funktionsprozessoren 5. Bei diesen Tests übergibt der Service-Prozessor 21 eine Nachricht an die jeweilige zusätzliche Funktionseinheit 6 und erwartet, daß die zusätzliche Funktionseinheit 6 damit eine Antwort berechnet. Die Ausgangsnachricht garantiert, daß verschiedene Antworten zu verschiedenen Zeiten erforderlich sind, so daß sich die zusätzliche Funktionseinheit 6 die korrekte Antwort nicht merken kann. Bei der Berechnung der Antwort wird eine sogenannte Überwachungsprozedur ausgeführt, bei der die gesamte interne Logik der zusätzlichen Funktionseinheit 6 getestet wird. Zur Erzeugung der Antwort wird der zusätzlichen Funktionseinheit 6 nur eine bestimmte Zeit erlaubt. Wird eine falsche Antwort gegeben oder ist keine Antwort innerhalb der gestellten Frist gegeben worden, so wird die zusätzliche Funktionseinheit 6 als defekt behandelt. Sind alle zusätzlichen Funktionseinheiten 6 getestet, so können sich die einzelnen Prozessoren 5 selbst testen, wobei die jeweiligen zusätzlichen Funktionseinheiten 6 die Überwachung und den Test des Testkerns übernehmen. Für den Test

des Arbeitsspeichers und des Systembusses gilt ähnliches wie bei Einzelprozessorsystemen. Entweder übernimmt der Service-Prozessor 21 den Test dieser Komponenten oder diese Komponenten haben selbst soviel "Intelligenz", um sich vollständig selbst zu testen, wobei der Service-Prozessor 21 nur Testauslösung und Testauswertung übernimmt. Arbeitsspeicher und Systembus sollten vor den Selbsttests der Funktionsprozessoren 5 getestet werden, damit im Rahmen dieser Selbsttests Diagnose-Programme nachgeladen werden können. Die Ergebnisse des Selbsttests werden von den zusätzlichen Funktionseinheiten 6 und dem Service-Prozessor 21 weitergemeldet. Der Service-Prozessor 21 reagiert entsprechend darauf, z.B. durch Abkopplung eines Funktionsprozessors 5.

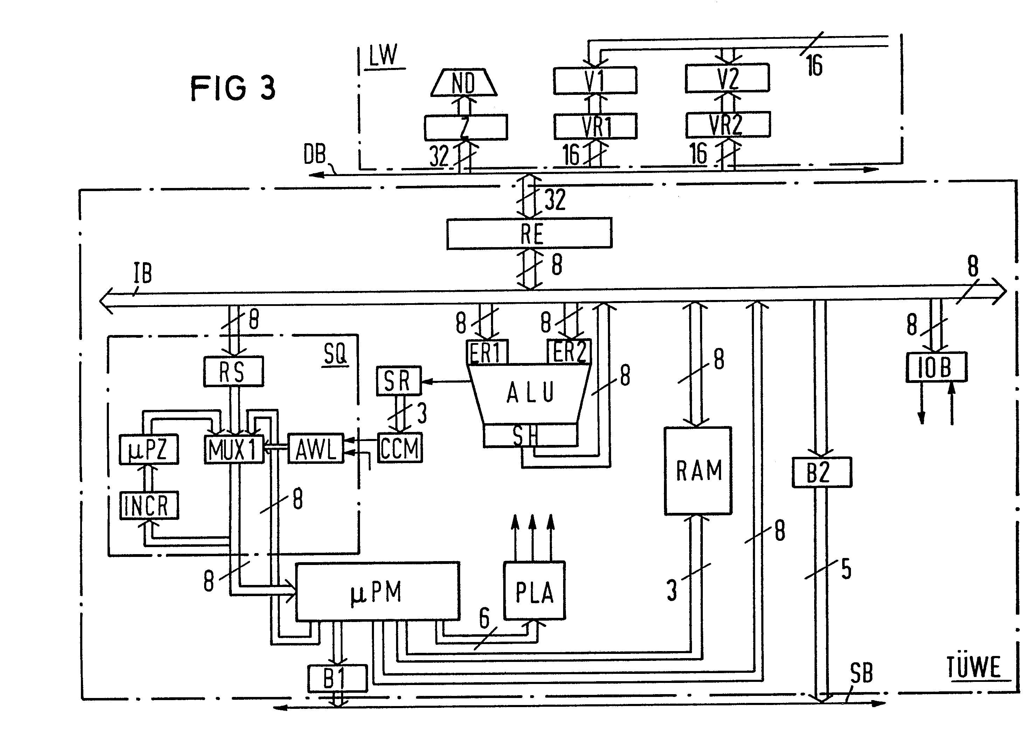

Fig.3 zeigt die Struktur einer erfindungsgemäßen zusätzlichen Funktionseinheit (Test- und Überwachungseinheit = TÜWE). Die Erfindung erlaubt, den Testkern eines Mikroprozessors "quasi von außen" zu testen. Durch die Zugriffsmöglichkeit der TÜWE zu sämtlichen Registern des Mikroprozessors können die Elemente des Testkerns zunächst vorgetestet werden. Der korrekte Ablauf eines sich daran anschließenden Grundtests wird dadurch sichergestellt, daß sämtliche Mikroprogrammadressen und die Ausführungszeit durch spezielle Testlogiken überwacht werden. Die TÜWE überprüft abschließend die Ergebnisse des Testlaufes.

Benutzer von Mikroprozessoren brauchen eine Möglichkeit, um Inhalte von einzelnen Registern lesen und verändern zu können. Bisher wurden diese Monitorfunktionen durch Software, sogenannte Monitorprogramme, realisiert. Dabei mußte sichergestellt sein, daß die Benutzer-Daten nicht verändert werden. Die Erfindung erlaubt nun, solche Monitorfunktionen hardware-mäßig ohne Eingriff in die Benutzer-Daten auszuführen. Dies führt zu einer wesentlichen Vereinfachung und zu großen Geschwindigkeitsgewinnen.

Die TÜWE ist eine zusätzliche Funktionseinheit 6 in
einem Mikroprozessor 5, der aus mehreren Blöcken (u.a.
Leitwerk LW und Rechenwerk RW) besteht. Die einzelnen
Funktionseinheiten 7 sind durch einen gemeinsamen Systembus (Datenbus DB und Steuerbus SB) miteinander verbunden.

Der gesamte Prozessor kann in zwei verschiedenen Modi
sein. Im sogenannten System-/User-Modus werden Benutzer-
Programme ausgeführt. Das Leitwerk LW ist in diesem Modus
für die gesamte Steuerung des Prozessors verantwortlich.
Die TÜWE ist in diesem Modus inaktiv. Ausgelöst durch
einen Befehl im Leitwerk LW oder durch ein Signal auf
einer Leitung (TMHALT) von außen, geht das System in den
Test-Modus über. Das Leitwerk LW gibt seine Steuerfunktion an die TÜWE ab. Bei einem Übergang in den Test-Modus
durch ein externes Signal wird der Mikroprogramm-Zähler
µPZ im Sequenzer SQ zurückgesetzt und die Adresse Null
als Adresse für den nächsten auszuführenden Mikrobefehl
über den Multiplexer MUX1 an den Mikroprogrammspeicher
µPM angelegt. Bei einem Übergang in den Test-Modus, veranlaßt durch das Leitwerk LW, wird der Mikroprogramm-
Zähler µPZ mit seinem Momentaninhalt auf den Ausgang des
Sequenzers SQ durchgeschaltet. Die TÜWE führt nun einen
Mikrobefehl aus, der im Mikroprogrammspeicher µPM enthalten ist. Als Quelle für die Adresse des nächsten Mikrobefehls kann alternativ neben dem Mikroprogramm-Zähler
µPZ, der die im Incrementer INCR um Eins erhöhte Adresse
des letzten Befehls enthält, noch das Register RS (externer Sprung) oder eine Konstante aus dem letzten Mikrobefehl (interner Sprung) dienen.

Das Mikroprogramm kann unterbrochen werden durch einen HALT-Befehl. Die TÜWE wartet dann auf ein Kommando von außen. In einem Mehr-Prozessorsystem liefert dieses Kommando ein Service-Prozessor 21, in einem Ein-Prozessorsystem eine Konsole. Damit kann der Benutzer einzelne Funktionen auswählen. Das Kommando wird über eine serielle Schnittstelle mit zwei Daten- und vier Steuerleitungen eingegeben. Eine zusätzliche Leitung (COMMAND) zeigt an, daß das eingegebene Datum ein Kommando ist. Ein Kommando besteht aus einer Sprungadresse für das Mikroprogramm und eventuellen Daten als Parameter. Die Eingabe erfolgt byteweise. Zunächst wird die Sprungadresse in den IN/OUT-Schifter mit Buffer IOB geschiftet. Von dort wird die Sprungadresse über den internen Bus IB in das Register RS des Sequenzers SQ geladen und der Multiplexer MUX1 so gesteuert, daß die Sprungadresse als Adresse für den nächsten Mikrobefehl verwendet wird. Nun können per Programm eventuell weitere Daten über die serielle Schnittstelle eingelesen werden. In umgekehrter Richtung können über diese serielle Schnittstelle Daten byteweise ausgegeben werden.

Die TÜWE hat Verbindung zu den anderen Funktionseinheiten 7 des Mikroprozessors 5 über den gemeinsamen Datenbus DB und den Steuerbus SB. Benötigt die TÜWE nun bei Ausführung ihrer Funktion Zugriff auf Komponenten in anderen Funktionseinheiten 7, so sendet sie dieser Funktionseinheit 7 einen entsprechenden Befehl über den Steuerbus SB. Diese Funktionseinheit 7 führt den Befehl unabhängig von der TÜWE aus. Anschließend kann die TÜWE z.B. ein Datum, das im Rechenwerk RW von einem Register auf den Datenbus DB gelegt wurde, vom Datenbus DB in das Register RE übernehmen und weiterverarbeiten, z.B. byteweise ausgeben. Analog kann in umgekehrter Richtung ein Datum aus dem Register RE auf den Datenbus DB gelegt werden, das dann von einer anderen Funktionseinheit übernommen wird. Der Befehl an eine andere Funktionseinheit kommt direkt in Form einer Konstante aus einem Mikrobefehl und wird über einen Buffer B1 auf den Steuerbus SB gegeben.

Weitere Komponenten der TÜWE sind, wie aus Fig.3 ersichtlich, eine 8-Bit-arithmetisch-logische Einheit ALU mit Schifter SH und zwei Eingangsregistern ER1, ER2 für Zähloperationen, Ausblenden von Datenbits und so weiter, ein 3-Bit-Statusregister SR für die Flag-Bits Zero, Carry und Negative und ein Condition-Code-Multiplexer CCM, acht allgemeine Register RAM zum Zwischenspeichern von Daten, ein Buffer B2 zwischen internem Bus IB und Steuerbus SB, über den eine Registeradresse an das Rechenwerk RW gegeben werden kann und eine programmierbare logische Anordnung PLA, die aus einem Mikrobefehl die einzelnen Steuersignale erzeugt.

Bei der Ausführung von Prüfprogrammen auf dem Mikroprozessorchip 5 kann eine on-line-Adress- und -Ausführungszeit-Überwachung durchgeführt werden. Die dazu notwendige Testlogik ist zwar im Leitwerk LW untergebracht, gehört aber logisch zur TÜWE und wird auch von der TÜWE gesteuert.

Die Adress-Überwachung erstreckt sich auf die Adresse von Mikrobefehlen, die im Mikroprogrammspeicher µPM des Leitwerks LW angesprochen werden. Eine Adresse ist gültig, wenn sie in einem bestimmten Bereich liegt, d.h. sie wird verglichen sowohl gegen eine Ober- als auch gegen eine Untergrenze. Dazu sind zwei Vergleicher V1, V2 und zwei Register VR1, VR2 für die Grenzen notwendig. Die Vergleichsergebnisse werden im STATUS-Register des Leitwerks LW angezeigt. Die beiden Register VR1, VR2

**0075713**

81 P 7 1 4 9 E

mit den Vergleichsadressen können vom Datenbus DB gesetzt werden.

Zur Zeitüberwachung existiert ein programmierbarer Zeitgeber. Dieser Zeitgeber besteht aus einem ladbaren Zähler Z, welcher nach Setzen des Enable-Signals herunterzählt, und einem Null-Detektor ND, dessen Ausgang "High" wird, wenn der Zähler Z gleich Null ist. Das Laden des Zählers Z erfolgt über den Datenbus DB. Das Ergebnis des Null-Detektors ND wird im STATUS-Register des Leitwerks LW angezeigt. Ein Ablauf der voreingestellten Zeit führt außerdem zu einem Übergang in den Test-Modus.

Mit Hilfe der oben beschriebenen und in Fig.3 dargestellten Hardware lassen sich in der TÜWE u.a. folgende Einzelfunktionen realisieren:

a) RESET: Es werden eine oder mehrere Funktionseinheiten 7 des Mikroprozessors zurückgesetzt. Dies geschieht dadurch, daß entsprechende Register (Busse) in den Funktionseinheiten 7 gecleared werden.

b) START: Die Kontrolle über das Gesamtsystem wird an das Leitwerk LW zurückgegeben. Das Gesamtsystem geht in den System-/User-Modus über.

c) SINGLE: Die Kontrolle über das Gesamtsystem wird zur Ausführung eines einzelnen Mikrobefehls an das Leitwerk LW übergeben. Anschließend ist das Gesamtsystem wieder im Test-Modus.

d) LOADREG: Es wird der Inhalt eines Registers in einer beliebigen Funktionseinheit 7 neu gesetzt. Der Wert wird über die externe serielle Schnittstelle eingelesen.

e) READREG: Es wird der Inhalt eines Registers in einer beliebigen Funktionseinheit 7 gelesen und ausgegeben.

f) TESTREG:  Es wird ein beliebiges Register mit Nullen
beschrieben, gelesen und verifiziert, anschließend mit
Einsen beschrieben, gelesen und verifiziert.

g) CLEARREG:  Es wird ein beliebiges Register zurückgesetzt.

h) STARTTPR: Es wird die Kontrolle über das Gesamtsystem
an das Leitwerk LW übergeben und ein Diagnose-Programm
gestartet.  Dabei wird die spezielle Testlogik, die für
die Überwachung von Mikroprogrammadressen und Programmausführungszeiten vorgesehen ist, aktiviert.

i) SHIFTIN/OUT:  Es wird über die externe serielle
Schnittstelle ein Byte eingelesen bzw. ausgegeben.

Patentansprüche:

1. Zusätzliche Funktionseinheit in einem Mikroprozessor, g e k e n n z e i c h n e t durch Steuermittel, mit denen eine selbständige Steuerung von Testabläufen auf dem Mikroprozessorchip (5) durchführbar ist.

2. Zusätzliche Funktionseinheit nach Anspruch 1, dadurch g e k e n n z e i c h n e t , daß die Steuermittel einen Zähler (Z) und eine programmierbare logische Anordnung (PLA) umfassen.

3. Zusätzliche Funktionseinheit nach Anspruch 1, dadurch g e k e n n z e i c h n e t , daß die Steuermittel Strukturelemente eines Mikroprozessors wie Leitwerk, Rechenwerk (ALU) und Mikroprogrammspeicher (µPM) umfassen.

4. Zusätzliche Funktionseinheit nach Anspruch 1 bis 3, g e k e n n z e i c h n e t durch Mittel zur Speicherung von Fehlermeldungen.

5. Zusätzliche Funktionseinheit nach Anspruch 1 bis 4, g e k e n n z e i c h n e t durch Mittel, welche bei Vorliegen von Fehlern auf dem Mikroprozesserchip (5) den Mikroprozessor in einen definierten HALT-Zustand bringen.

6. Zusätzliche Funktionseinheit nach Anspruch 1 bis 5, g e k e n n z e i c h n e t durch Mittel zur Überwachung und Steuerung eines Selbsttests des Mikroprozessors.

7. Zusätzliche Funktionseinheit nach Anspruch 1 bis 6, g e k e n n z e i c h n e t durch Mittel zur Überwachung von Hardware-Fehlern auf dem Mikroprozessorchip (5).

8. Verwendung von mehreren zusätzlichen Funktionseinheiten in je einem Mikroprozessor für ein Mikroprozessorsystem, nach Anspruch 1 bis 7, g e k e n n z e i c h n e t durch mehrere Funktionsprozessoren (5), einen Service-Prozessor (21) und einen Koordinator (22).

9. Mikroprozessorsystem nach Anspruch 8, g e k e n n z e i c h n e t durch ein eigenes Kommunikationssystem für den Austausch von Daten und Kommandos zwischen dem Service-Prozessor (21) und den zusätzlichen Funktionseinheiten (6) in den einzelnen Funktionsprozessoren (5).

10. Verfahren zum Betrieb einer zusätzlichen Funktionseinheit nach Anspruch 1 bis 9, g e k e n n z e i c h - n e t durch einen Systembenutzer-Modus und einen Test-Modus.

11. Verfahren zum Betrieb einer zusätzlichen Funktionseinheit nach Anspruch 1 bis 10, dadurch g e k e n n - z e i c h n e t , daß der Übergang in den Test-Modus intern auf dem Mikroprozessorchip (5) ausgelöst wird.

12. Verfahren zum Betrieb einer zusätzlichen Funktionseinheit nach Anspruch 1 bis 10, dadurch g e k e n n - z e i c h n e t , daß der Übergang in den Test-Modus extern ausgelöst wird.

13. Verfahren zum Betrieb einer zusätzlichen Funktionseinheit nach Anspruch 1 bis 12, dadurch g e k e n n - z e i c h n e t , daß im Test-Modus die zusätzliche Funktionseinheit (6) die Gesamtsteuerung auf dem Mikroprozessorchip (5) übernimmt.

14. Verfahren zum Betrieb einer zusätzlichen Funktionseinheit nach Anspruch 1 bis 13, dadurch g e k e n n -

z e i c h n e t , daß die zusätzliche Funktionseinheit
(6) den für einen Selbsttest notwendigen harten Kern des
Mikroprozessors testet, sodann den Selbsttest des Mikroprozessors auslöst und überwacht und die Auswertung des
Testergebnisses übernimmt.

15. Verfahren zum Betrieb einer zusätzlichen Funktionseinheit nach Anspruch 1 bis 9, dadurch g e k e n n -
z e i c h n e t , daß die zusätzliche Funktionseinheit
(6) während der Ausführung von Programmen auf dem Mikroprozessorchip (5) eine on-line-Adress- und Ausführungszeit-Überwachung durchführt.

16. Verfahren zum Betrieb einer zusätzlichen Funktionseinheit nach Anspruch 11, dadurch g e k e n n z e i c h -
n e t , daß der zusätzlichen Funktionseinheit (6) durch
einen Befehl im Leitwerk (LW) die Gesamtsteuerung des
Mikroprozessorchips (5) vom Leitwerk (LW) übertragen
wird.

17. Verfahren zum Betrieb einer zusätzlichen Funktionseinheit nach Anspruch 12, dadurch g e k e n n z e i c h -
n e t , daß der zusätzlichen Funktionseinheit (6) durch
ein externes Signal auf der Leitung (TMHALT) die Gesamtsteuerung des Mikroprozessorchips (5) übertragen wird.

18. Verfahren zum Betrieb einer zusätzlichen Funktionseinheit mit einem Übergang in den Test-Modus durch ein
externes Signal nach Anspruch 17, dadurch g e k e n n -
z e i c h n e t , daß der Mikroprogramm-Zähler (μPZ) in
einem Sequenzer (SQ) zurückgesetzt und die Adresse Null
als Adresse für den nächsten auszuführenden Mikrobefehl
über einen Multiplexer (MUX1) an den Mikroprogrammspeicher (μPM) angelegt wird.

19. Verfahren zum Betrieb einer zusätzlichen Funktionseinheit mit einem Übergang in den Test-Modus, veranlaßt
durch das Leitwerk LW nach Anspruch 16, dadurch g e -
k e n n z e i c h n e t , daß der Mikroprogramm-Zähler
(μPZ) mit seinem momentanen Inhalt auf den Ausgang eines
Sequenzers (SQ) durchgeschaltet wird.

20. Verfahren zum Betrieb einer zusätzlichen Funktionseinheit nach Anspruch 12 oder 17, dadurch g e k e n n -
z e i c h n e t , daß über eine externe serielle Schnittstelle, bestehend aus zwei Datenleitungen, vier Steuerleitungen und einer COMMAND-Leitung, ein Kommando in Form
einer Sprungadresse für das Mikroprogramm eingegeben wird,
wobei sich die zusätzliche Funktionseinheit (6) durch
Ausführung eines HALT-Befehles in einem Warte-Zustand befindet, daß die Sprungadresse zunächst in einen IN/OUT-
Schifter mit Buffer (IOB) geschiftet, von dort über einen
internen Bus (IB) in ein Register (RS) des Sequenzers (SQ)
geladen und daß ein Multiplexer (MUX1) so gesteuert wird,
daß die Sprungadresse als Adresse für den nächsten Mikrobefehl verwendet wird.

21. Verfahren zum Betrieb einer zusätzlichen Funktionseinheit nach Anspruch 20, dadurch g e k e n n z e i c h -
n e t , daß Daten byteweise eingelesen bzw. ausgegeben
werden, wobei der IN/OUT-Schifter mit Buffer (IOB) die
Daten aufnimmt bzw. abgibt und am internen Bus (IB) angeschlossen ist.

22. Verfahren zum Betrieb einer zusätzlichen Funktionseinheit nach Anspruch 1 bis 21, dadurch g e k e n n -
z e i c h n e t , daß beim Zugriff auf Komponenten in
einer anderen Funktionseinheit (7) die zusätzliche Funktionseinheit (6) der entsprechenden Funktionseinheit (7)
einen entsprechenden Befehl sendet, der direkt in Form einer Konstante aus einem Mikrobefehl kommt und über einen Buffer (B1) auf den Steuerbus (SB) gegeben wird.

23. Verfahren zum Betrieb einer zusätzlichen Funktionseinheit nach Anspruch 22, dadurch g e k e n n z e i c h n e t , daß im Falle eines Zugriffs auf ein Register im Rechenwerk die Registeradresse über den internen Bus (IB) und einen Buffer (B2) auf den Steuerbus (SB) gegeben wird.

24. Verfahren zum Betrieb einer zusätzlichen Funktionseinheit nach Anspruch 22 oder 23, dadurch g e k e n n - z e i c h n e t , daß die zusätzliche Funktionseinheit (6) je nach Richtung einer eventuell mit dem Zugriff auf eine andere Funktionseinheit (7) verbundenen Datenübertragung vor der Ausführung des Befehls in der anderen Funktionseinheit (7) ein Datum aus einem Register (RE), das über den internen Bus (IB) ladbar ist, auf den Datenbus (DB) legt bzw. nach der Ausführung des Befehls in der anderen Funktionseinheit (7) ein Datum vom Datenbus (DB) in das Register (RE) übernimmt.

25. Verfahren zum Betrieb einer zusätzlichen Funktionseinheit nach Anspruch 15, dadurch g e k e n n z e i c h - n e t , daß bei Ausführung von Prüfmikroprogrammen im Leitwerk (LW) eine on-line-Adress- und Ausführungszeit-Überwachung durchgeführt wird, wobei sich die Adress-Überwachung auf die Adresse von Mikrobefehlen, welche im Mikroprogrammspeicher (µPM) des Leitwerks (LW) angesprochen werden, bezieht, und wobei die Adresse durch zwei Vergleicher (V1, V2) mit Vergleichsregister (VR1, VR2) gegen eine Ober- und eine Untergrenze verglichen wird und das Ergebnis im STATUS-Register des Leitwerks (LW) angezeigt wird, und wobei die Zeit-Überwachung durch einen ladbaren Zähler (Z) mit Null-Detektor (ND) durch- geführt und das Ergebnis ebenfalls im STATUS-Register des Leitwerks (LW) angezeigt wird.

26. Verfahren zum Betrieb einer zusätzlichen Funktionseinheit nach Anspruch 15 oder 25, dadurch g e k e n n - z e i c h n e t , daß bei der Zeit-Überwachung ein Ablauf der voreingestellten Zeit zu einem Übergang in den Test-Modus führt.

27. Verfahren zum Betrieb eines Mikroprozessorsystems nach Anspruch 9 bis 26, dadurch g e k e n n z e i c h - n e t , daß der Service-Prozessor (21) von einer eigenen zusätzlichen Funktionseinheit (6) zuerst getestet wird, daß der Service-Prozessor (21) sodann einen Test von Systembus und Arbeitsspeicher veranlaßt und daß schließlich der Service-Prozessor (21) sukzessive bei den einzelnen Funktionprozessoren (5) Selbsttests auslöst.

FIG 1

FIG 2

FIG 3